(19) Europäisches Patentamt

European Patent Office

Office européen des brevets

(11) **EP 4 787 980 A1**

(12) **EUROPEAN PATENT APPLICATION**
published in accordance with Art. 153(4) EPC

(43) Date of publication:
**05.08.2026 Bulletin 2026/32**

(21) Application number: **23953855.6**

(22) Date of filing: **29.09.2023**

(51) International Patent Classification (IPC):
*H04W 56/00* (2009.01)     *H04W 64/00* (2009.01)

(52) Cooperative Patent Classification (CPC):
**H04W 64/00; H04W 56/00; H04W 56/0015;**
H04W 92/18

(86) International application number:
**PCT/CN2023/123039**

(87) International publication number:
**WO 2025/065713 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Quectel Wireless Solutions Co., Ltd.
Shanghai 201601 (CN)**

(72) Inventor: **ZHAO, Zheng
Shanghai 201601 (CN)**

(74) Representative: **Fish & Richardson P.C.
Highlight Business Towers
Mies-van-der-Rohe-Straße 8
80807 München (DE)**

(54) **SIDELINK COMMUNICATION METHOD AND COMMUNICATION DEVICE**

(57)     The present disclosure provides a method and a communication device for sidelink communication. The method includes: receiving, by a first device, first information configured to indicate at least one of synchronization information of a first terminal device and synchronization information of a second terminal device; and positioning, by the first device, a third terminal device based on the first information.

```
                                                    ┌─ S1110
┌──────────────────────────────────────────┐
│  The first device receives first information │
└──────────────────────────────────────────┘
                    │
                                                    ┌─ S1120
┌──────────────────────────────────────────┐
│  The first device positions a third terminal │
│   device based on the first information      │
└──────────────────────────────────────────┘
```

**FIG. 11**

## Description

### TECHNICAL FIELD

The present disclosure relates to the field of communication technology, and in particular to a method and a communication device for sidelink communication.

### BACKGROUND

In a sidelink communication system, terminal devices can perform synchronization based on different synchronization sources. When two terminal devices do not function as a synchronization source of one another, there may be a synchronization timing difference between these two terminal devices, leading to many problems.

### SUMMARY

The present disclosure provides a method and a communication device for sidelink communication. In the following, aspects involved in the embodiments of the present disclosure will be illustrated in detail.

In a first aspect, a method for sidelink communication is provided, including: receiving, by a first device, first information configured to indicate at least one of synchronization information of a first terminal device and synchronization information of a second terminal device; and positioning, by the first device, a third terminal device based on the first information.

In a second aspect, a method for sidelink communication is provided, including: sending, by a first terminal device, first information to a first device. The first information is configured to indicate at least one of synchronization information of the first terminal device and synchronization information of a second terminal device, and is configured for the first device to position a third terminal device.

In a third aspect, a method for sidelink communication is provided, including: sending, by a second terminal device, first information to a first device. The first information is configured to indicate at least one of synchronization information of a first terminal device and synchronization information of the second terminal device, and is configured for the first device to position a third terminal device.

In a fourth aspect, a communication device implemented as a first device is provided, including: a reception module configured to receive first information configured to indicate at least one of synchronization information of a first terminal device and synchronization information of a second terminal device; and a positioning module configured to position a third terminal device based on the first information.

In a fifth aspect, a communication device implemented as a first terminal device is provided, including: a first sending module configured to send first information to a first device. The first information is configured to indicate at least one of synchronization information of the first terminal device and synchronization information of a second terminal device, and is configured for the first device to position a third terminal device.

In a sixth aspect, a communication device implemented as a second terminal device is provided, including: a sending module configured to send first information to a first device. The first information is configured to indicate at least one of synchronization information of a first terminal device and synchronization information of the second terminal device, and is configured for the first device to position a third terminal device.

In a seventh aspect, a communication device is provided, including: a transceiver, a memory, and a processor. The memory is configured to store programs, which, when called and executed by the processor, cause the processor to control the transceiver to receive or send signals, in order to implement operations of the method as illustrated in any one of the first aspect to the third aspect.

In an eighth aspect, a device is provided, including: a processor, configured to call and execute programs stored in a memory, to implement operations of the method as illustrated in any one of the first aspect to the third aspect.

In a ninth aspect, a chip is provided, including: a processor configured to call and execute programs stored in a memory, to cause a device being provided with the chip to implement operations of the method as illustrated in any one of the first aspect to the third aspect.

In a tenth aspect, a non-transitory computer readable storage medium is provided, the non-transitory computer readable storage medium is configured to store programs, which, when called and executed, cause a computer to implement operations of the method as illustrated in any one of the first aspect to the third aspect.

In an eleventh aspect, a computer program product is provided, the computer program product includes programs, which, when called and executed, cause a computer to implement operations of the method as illustrated in any one of the first aspect to the third aspect.

In a twelfth aspect, a computer program is provided. When the computer program is called and executed, causes a computer to implement operations of the method as illustrated in any one of the first aspect to the third aspect.

In the embodiments of the present disclosure, the synchronization timing difference between the first terminal device and the second terminal device can be determined by acquiring at least one of the synchronization information of the first terminal device and the synchronization information of the second terminal device (i.e., the first information), providing a basis for eliminating the impact resulted from the synchronization timing differences. For example, the positioning error of the terminal device can be eliminated based on the first information, which helps to improve the accuracy of the positioning results of the terminal device.

**BRIEF DESCRIPTION OF THE DRAWINGS**

FIG. 1 shows an example of an architecture of a wireless communication system to which the embodiments of the present disclosure are applicable.

FIG. 2 shows an example of a scenario of the sidelink communication within the network coverage.

FIG. 3 shows an example of a scenario of the sidelink communication partially within the network coverage.

FIG. 4 shows an example of a scenario of the sidelink communication outside the network coverage.

FIG. 5 shows an example of a scenario of the sidelink communication based on a central control node.

FIG. 6 shows an example of the sidelink communication based on broadcast.

FIG. 7 shows an example of the sidelink communication based on unicast.

FIG. 8 shows an example of the sidelink communication based on multicast.

FIG. 9 is a diagram of a synchronization timing difference between terminal devices.

FIG. 10 is a diagram of another synchronization timing difference between terminal devices.

FIG. 11 is a flowchart of the method for sidelink communication provided in the embodiments of the present disclosure.

FIG. 12 is a structural diagram of a communication device provided in some embodiments of the present disclosure.

FIG. 13 is a structural diagram of another communication device provided in some embodiments of the present disclosure.

FIG. 14 is a structural diagram of still another communication device provided in some embodiments of the present disclosure.

FIG. 15 is a structural diagram of a device usable for implementing the embodiments of the present disclosure.

**DETAILED DESCRIPTION OF THE EMBODIMENTS**

The following will illustrate, in conjunction with the accompanying drawings, the technical solutions of the present disclosure.

**Communication system architecture**

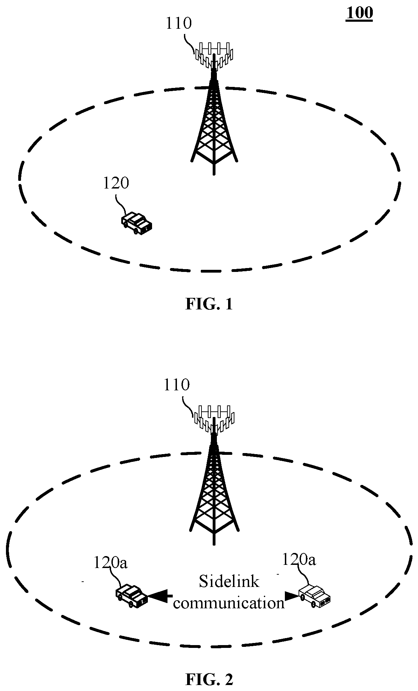

FIG. 1 shows an example of an architecture of a wireless communication system 100 to which the embodiments of the present disclosure are applicable. The wireless communication system 100 may include network devices 110 and terminal devices 120. The network devices 110 may be devices that communicate with the terminal devices 120. The network devices 110 can provide communication coverage for a specific geographic area and can communicate with the terminal devices 120 located in the coverage area.
FIG. 1 exemplarily shows a network device and a terminal device. In some embodiments, the wireless communication system 100 may include one or more network devices 110 and/or one or more terminal devices 120.

For a network device 110, one or more terminal devices 120 may be all located within the network coverage of the network device 110, all located outside the network coverage of the network device 110, or partially located within the network coverage of the network device 110 and partially located outside the network coverage of the network device 110, which will not be specified in the embodiments of the present disclosure.

In some embodiments, the wireless communication system 100 may further include other network entities such as a network controller, a mobility management entity, and the like, which will not be specified in the embodiments of the present disclosure.

It should be understood that the technical solutions of the embodiments of the present disclosure may be applied to various communication systems, such as 5th generation (5G) systems or new radio (NR) systems, long term evolution (LTE) systems, LTE frequency division duplex (FDD) systems, LTE time division duplex (TDD) systems, and the like. The technical solutions provided in the present disclosure may also be applied to future communication systems, such as the sixth generation mobile communication system, satellite communication system, and the like.

The terminal device in the embodiments of the present disclosure may be referred to as user equipment (UE), an access terminal, a user unit, a user station, a mobile station (MS), a mobile terminal (MT), a remote station, a remote terminal, a mobile device, a user terminal, a terminal, a wireless communication device, a user proxy or a user device. The terminal device in the embodiments of the present disclosure may refer to a device that provides voice and/or data connectivity to a user, and can be used to communicate people, an object and a computer, such as a handheld device or a vehicle-mounted device with wireless connection function. The terminal device in the embodiments of the present disclosure may be a mobile phone, a tablet computer (Pad), a notebook computer, a palm computer, a mobile internet device (MID), a wearable device, a virtual reality (VR) device, an augmented reality (AR) device, a wireless terminal in industrial control, a wireless terminal in self-driving, a wireless terminals in a remote medical surgery, a wireless terminals in smart grid, a wireless terminal in transportation safety, a wireless terminal in a smart city, a wireless terminal in a smart home, or the like. In some embodiments, the UE may function as a base station. For example, the UE may function as a scheduling entity that provides a sidelink signal between UEs in V2X or D2D, etc. For example, a cellular phone and a car communicate with each other using sidelink signals. The cellular phone communicates with smart home devices, without relaying communication signals by a base station.

The network device in the embodiments of the present disclosure is a device configured to communicate with a terminal device, which may also be referred to as an access network device or a wireless access network device, for example, the network device may be a base station. The network device in the embodiments of the present disclosure may refer to a radio access network (RAN) node (or device) that provides access to a wireless network for a terminal device. The base station may broadly cover the following names, or be a substitute for the following names, such as Node B, evolved NodeB (eNB), next generation NodeB (gNB), a relay station, an access point, a transmitting and receiving point (TRP), a transmitting point (TP), a master eNodeB (MeNB), a secondary eNodeB (SeNB), a multi-standard radio (MSR) node, a home base station, a network controller, an access node, a wireless node, an access piont (AP), a transmitting node, a transceiver node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node, or a combination thereof. A base station may also be a communication module, a modem or a chip arranged in the aforementioned equipment or devices. The base station may also be a mobile switching center, a device that serves as a base station in device-to-device (D2D) communication, vehicle-to-everything (V2X) communication, machine-to-machine (M2M) communication, a network-side device in 6G network, and a device that serves as a base station in future communication systems. The base station can support networks using the same or different access technologies. The specific technology and equipment form adopted by the network device are not limited in the embodiments of the present disclosure.

The base station may be fixed or mobile. For example, a helicopter or a drone may be configured as a mobile base station, and one or more cells may move with the location of the mobile base station. In other examples, a helicopter or a drone may be configured as a device for communicating with another base station.

In some deployment, the network device in the embodiments of the present disclosure may refer to CU or DU, or the network device may include both CU and DU. gNB may also include AAU.

The network devices and the terminal devices may be deployed on land, including indoor or outdoor, handheld or vehicle boarded, or may be deployed on the water, or may further be deployed on airplanes, balloons and satellites in the air. The scenes where the network devices and the terminal devices are located is not limited in the embodiments of the present disclosure.

It should be understood that all or part of the functions of the communication devices in the present disclosure may also be implemented by the functions of software running on hardware, or by the virtualization functions instantiated on platforms (such as cloud platforms).

## Sidelink communication under various network coverage conditions

The sidelink communication refers to a communication technology based on sidelinks. The sidelink communication may for example be implemented as device to device (D2D) or vehicle to everything (V2X) communication. In traditional cellular systems, communication data is received or transmitted between terminal devices and network devices, while the sidelink communication supports direct transmission of communication data between terminal devices. Compared to traditional cellular communication, direct transmission of communication data between terminal devices can have increased spectral efficiency and reduced transmission delay. For example, the sidelink communication technology is used in V2X systems.

Depending on the network coverage conditions for terminal devices, the sidelink communication may include sidelink communication within a network coverage, sidelink communication partially within a network coverage, and sidelink communication outside a network coverage.

FIG. 2 shows an example of a scenario of the sidelink communication within the network coverage. In the scenario shown in FIG. 2, two terminal devices 120a are both within the coverage of the network device 110. Therefore, both the terminal devices 120a can receive configuration signaling from the network device 110 (the configuration signaling in the present disclosure may also be replaced with configuration information), and determine the sidelink configuration based on the configuration signaling from the network device 110. After the two terminal devices 120a have been configured for sidelink communication, sidelink communication can be performed on sidelinks.

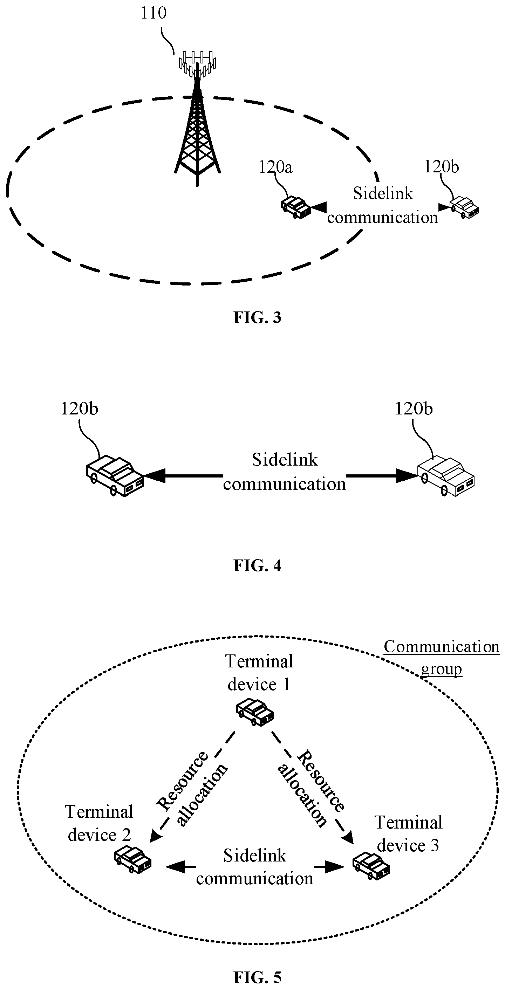

FIG. 3 shows an example of a scenario of the sidelink communication partially within the network coverage. In the scenario shown in FIG. 3, the terminal device 120a communicates with the terminal device 120b using sidelinks. The terminal device 120a is located within the coverage of the network device 110, so the terminal device 120a can receive configuration signaling from the network device 110 and can determine the sidelink configuration based on the configuration signaling from the network device 110. The terminal device 120b is located outside the network coverage and cannot receive configuration signaling from the network device 110. In this case, the terminal device 120b may determine the sidelink configuration based on pre-configuration information and/or information carried in the physical sidelink broadcast channel (PSBCH) sent by the terminal device 120a located within the network coverage. After the terminal device 120a and the terminal device 120b have been configured for sidelink communication, sidelink communication can be performed on sidelinks.

FIG. 4 shows an example of a scenario of the sidelink communication outside the network coverage. In the scenario shown in FIG. 4, two terminal devices 120b are both outside the network coverage. In this case, both the terminal devices 120b may determine the sidelink configuration based on the pre-configuration information. After the two terminal devices 120b have been configured for sidelink communication, sidelink communication can be performed on sidelinks.

## Sidelink communication based on a central control node

FIG. 5 shows an example of a scenario of the sidelink communication based on a central control node. In this scenario of the sidelink communication, a plurality of terminal devices may form a communication group including a central control node. The central control node may be a terminal device of the communication group (such as the terminal device 1 in FIG. 5), which may also be referred to as a cluster header (CH) terminal device. The central control node may be responsible for implementing one or more of the following functions: establishing a communication group, joining and leaving of group members of the communication group, coordinating resources within the communication group, allocating sidelink transmission resources to other terminal devices, receiving sidelink feedback information from other terminal devices, and coordinating resources with other communication groups.

## Data transmission methods of sidelink communication

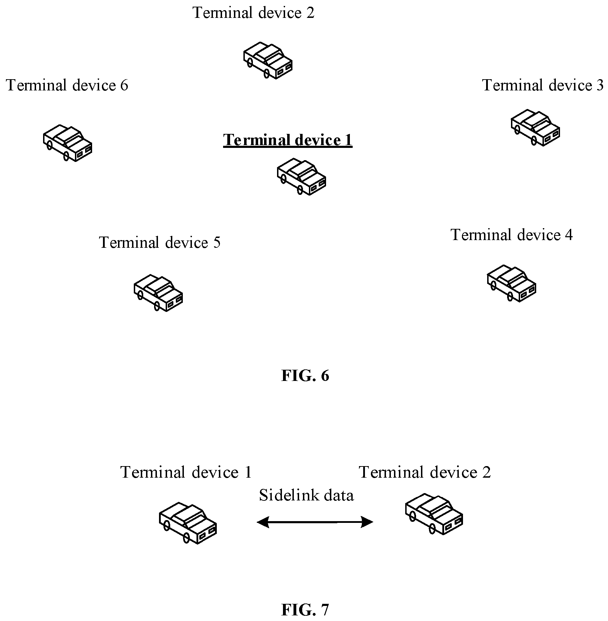

Some sidelink communication systems, such as long term evolution vehicle to everything (LTE-V2X), support broadcast-based data transmission (hereinafter referred to as broadcast transmission for short). For broadcast transmission, the receiving-end terminal may be any terminal device around the sending-end terminal. Taking FIG. 6 as an example, terminal device 1 is the sending-end terminal, and the receiving-end terminal corresponding to the sending-end terminal is any terminal device around the terminal device 1, such as the terminal devices 2 to 6 in FIG. 6.

In addition to broadcast transmission, some communication systems further support unicast-based data transmission (hereinafter referred to as unicast transmission for short) and/or multicast-based data transmission (hereinafter referred to as multicast transmission for short). For example, the new radio vehicle to everything (NR-V2X) aims to support autonomous driving which raises higher requirements for data exchange between vehicles. For example, data exchange between vehicles requires higher throughput, lower delay, higher reliability, larger coverage, and more flexible resource allocation methods. Therefore, in order to improve the data exchange performance between vehicles, NR-V2X introduces unicast transmission and multicast transmission.

For unicast transmission, generally only one terminal device functions as the receiving-end terminal. Taking FIG. 7 as an example, the transmission between terminal device 1 and terminal device 2 is unicast. Terminal device 1 may be the sending-end terminal, and terminal device 2 may be the receiving-end terminal; or terminal device 1 may be the receiving-end terminal, and terminal device 2 may be the sending-end terminal.

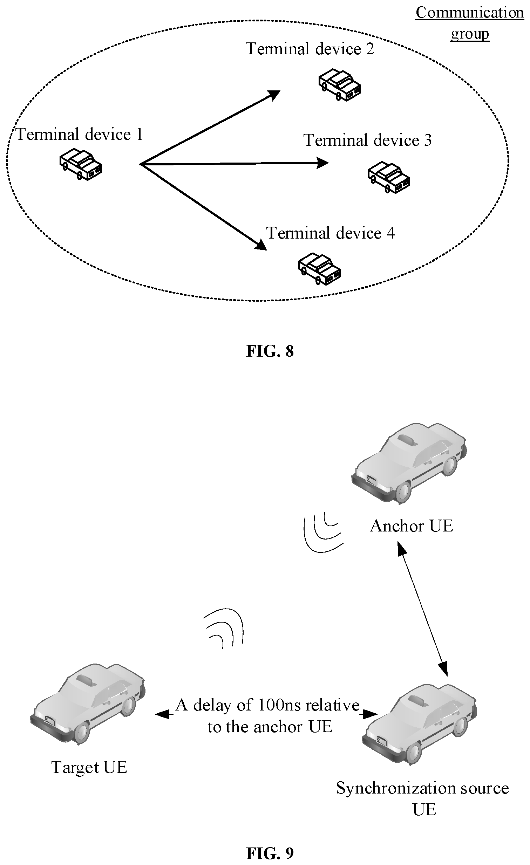

For multicast transmission, the receiving-end terminals may be terminal devices in a communication group, or the receiving-end terminals may be terminal devices within a certain transmission distance. Taking FIG. 8 as an example, terminal device 1, terminal device 2, terminal device 3, and terminal device 4 form a communication group. When terminal device 1 sends data, all other terminal devices in the group (terminal devices 2 to 4) may function as receiving-end terminals.

In a sidelink system (also known as a sidelink communication system), terminal devices may perform synchronization with the aid of one or more of: GNSS, a base station, and a synchronization reference terminal node. That is to say, the types of synchronization sources may include GNSS, base stations, synchronization reference terminal nodes, or the like.

Generally, terminal devices within the coverage of a base station may directly synchronize to the base station. In other words, the base station functions as the synchronization source. It is noted that synchronizing to the base station may also be interpreted as: synchronizing to a cell corresponding to the base station, synchronizing to a cell, or the like. Herein, the cell is within the coverage of the base station.

In some embodiments, terminal devices may also directly synchronize to GNSS, such as GNSS satellites or ground stations.

In some embodiments, terminal devices may also synchronize to a synchronization reference terminal node. The synchronization reference terminal node may be directly synchronized to a base station or a terminal device of GNSS, or be indirectly synchronized to a base station or a terminal device of GNSS.

When two terminal devices (taking a first terminal device and a second terminal device as an example) communicate with each other using sidelink, if synchronization of one terminal device is not implemented through the other one, there may be differences between the transmission and reception timing of the first terminal device and the second terminal device, or in other words, there may be differences between the synchronization timing of the first terminal device and the second terminal device. Synchronization of one terminal device being not implemented through the other one may refer to that the first terminal device is not the synchronization source of the second terminal device, and the second terminal device is not the synchronization source of the first terminal device.

Taking a synchronization source of the anchor terminal device and the target terminal device being a synchronization reference terminal as an example, the synchronization timing difference will be illustrated below according to various conditions of the synchronization source of the anchor terminal device and the target terminal device.

FIG. 9 is a diagram of a synchronization time difference between an anchor UE and a target UE when both the anchor UE and the target UE are synchronized to a same synchronization source.

For small-scale sidelink communication systems in a region, most anchor terminal devices and target terminal devices will be synchronized to a same synchronization source. Referring to FIG. 9, both the target UE and the anchor UE are synchronized to a same synchronization source (the synchronization source UE in FIG. 9). Due to the difference between the distance between the target UE and the synchronization source UE and the distance between the anchor UE and the synchronization source UE, there may be differences between the synchronization timing of the target UE and the anchor UE.

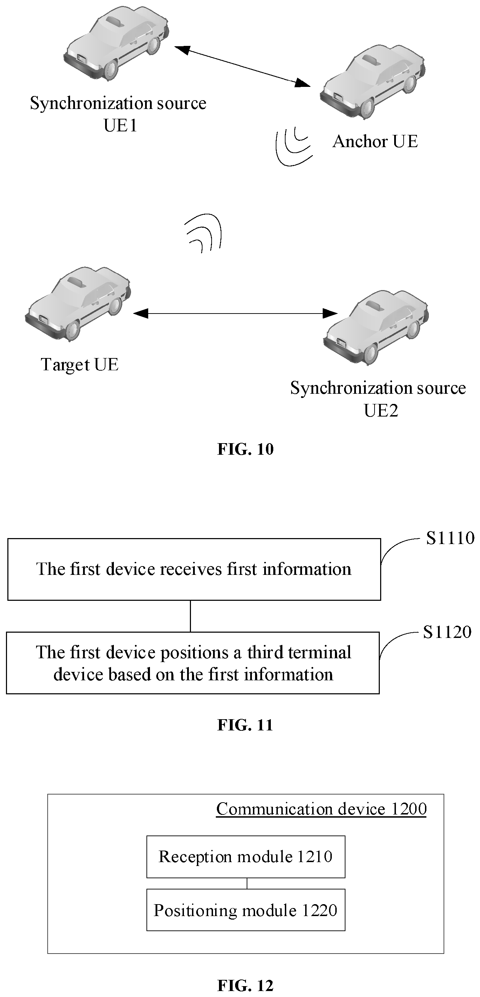

FIG. 10 is a diagram of a synchronization time difference between an anchor UE and a target UE when the anchor UE and the target UE are respectively synchronized to synchronization sources different from each other.

Referring to FIG. 10, the anchor UE is synchronized to a synchronization source UE1, and the target UE is synchronized to a synchronization source UE2. Due to the difference between the distance between the target UE and the synchronization source UE2 and the distance between the anchor UE and the synchronization source UE1, there may be differences between the synchronization timing of the target UE and the anchor UE.

When the synchronization source(s) of the anchor terminal device and the target terminal device is a same base station (or GNSS) or base stations (or GNSS) different from each other, the above problems may also be encountered.

In the scenario shown in FIG. 9 or FIG. 10, even if a positioning server knows the locations of the synchronization source and the user of the anchor terminal, it cannot acquire the synchronization timing differences between users of the anchor terminals or between users of the anchor terminals and users of the target terminals due to the unknown locations of the users of the target terminals.

The difference between synchronization timing (also known as synchronization error or synchronization time difference) as mentioned above may cause many problems.

When positioning in a sidelink system, for example, distance or angle measurements may be performed on the target terminal device and/or anchor terminal device to obtain positioning-related information of the target terminal device. However, the synchronization error between the target terminal device and the anchor terminal device, or the synchronization error between anchor terminal devices, may cause errors in estimating information such as propagation delay, angle, or the like, thereby reducing the accuracy of positioning results.

It is noted that an anchor terminal device refers to a user terminal that serves as a reference point or a benchmark in positioning, measurement, or other functions. Anchor terminal devices are typically used to provide reference signals or perform measurements to support the function of positioning other terminals.

The impact of synchronization error on positioning is associated with the specific implementation of the positioning system. Generally speaking, synchronization errors may increase the distance-measuring error of the positioning system, thereby affecting the accuracy and precision of positioning. Synchronization errors may also cause phase shifts in the received signals, resulting in errors in the distance-measuring results, and these errors may accumulate with increase of distances. Synchronization errors may also affect time slot division and clock synchronization, resulting in offsets of timestamps of the received signals, and these offsets may accumulate over time.

For example, the propagation delay from terminal device A to terminal device B is 500ns, but due to the time difference between the sending time of terminal device A and the receiving or sending time of terminal device B, terminal device B will report the measured absolute time or report based on its frame format. When reporting based on frame format of terminal device B, the propagation delay obtained by location calculation of the positioning server will include the time difference between the sending time of terminal device A and the receiving or sending time of terminal device B. That is to say, when the positioning server performs location calculation, the calculated propagation delay is greater than or even far greater than 500ns.

Related technologies have proposed some solutions to address the aforementioned problems. For example, high-precision clock sources and synchronization mechanisms are used to reduce synchronization errors. For example, the number of anchor terminal devices is increased to improve measurement accuracy and reduce the cumulative effect of errors. For example, other sensors or technologies, such as inertial measurement units (IMUs) or geomagnetic sensors, are combined to improve the robustness and accuracy of the positioning system. However, the impact of synchronization errors on positioning still exists and cannot be ignored.

In order to address the above problems, the embodiments of the present disclosure provide a method for sidelink communication, in which the first device acquires synchronization information of the first terminal device and/or synchronization information of the second terminal device (i.e., the first information), which is conducive to determining the synchronization error between the first terminal device and the second terminal device, thereby providing a basis for eliminating the impact of synchronization error. For example, the positioning error of the terminal device can be processed based on the first information, which helps to improve the accuracy of the positioning results of the terminal device.

FIG. 11 is a flowchart of the method for sidelink communication provided in the embodiments of the present disclosure. The method in FIG. 11 is applicable to a sidelink communication system. Hereinafter, the method shown in FIG. 11 is illustrated from the perspective of interaction between the first device and the first terminal device, and between the first device and the second terminal device.

In some embodiments, the first terminal device and the second terminal device may be terminal devices for sidelink communication. The synchronization information of the first terminal device and/or the second terminal device is acquired, which helps to achieve synchronization calibration between the first terminal device and the second terminal device.

For example, the first terminal device and/or the second terminal device may be terminal devices participating in sidelink positioning. As an example, both the first terminal device and the second terminal device are reference terminal devices participating in sidelink positioning. The synchronization information of the first terminal device and/or the second terminal device is acquired, which helps to achieve synchronization between reference terminal devices and eliminate the positioning errors caused by synchronization errors.

In some embodiments, the first device may be a device for positioning management or a terminal device having positioning management functionality. For example, the first device may be a positioning server.

The method shown in FIG. 11 may include operations S1110 and S1120.

At S1110, the first device receives first information.

The first information may be configured to indicate at least one of synchronization information of the first terminal device and synchronization information of the second terminal device. The synchronization information herein for example may refer to information associated with the synchronization of terminal devices. For example, synchronization information may include information associated with synchronization sources, time difference information, round-trip latency between terminal devices, and the like. The time difference information may include above-mentioned synchronization error information.

At S1120, the first device positions a third terminal device based on the first information.

In some embodiments, the third terminal device may be the above-mentioned target terminal device. The third terminal device may receive the pilot signals sent by the first terminal device and/or the second terminal device. The third terminal device may also send pilot signals to the first terminal device and/or the second terminal device.

The pilot signals may be signals used for sidelink positioning, such as a positioning reference signal (PRS).

In related technologies, the first device may estimate the location information of the third terminal device based on the propagation delay and/or angle information of the pilot signals transmitted between the first terminal device, the second terminal device, and the third terminal device. In some embodiments, the first device may estimate the location information of the third terminal device based on the first information and on the propagation delay and/or angle information of the pilot signals transmitted between the first terminal device, the second terminal device, and the third terminal device.

In embodiments of the present disclosure, the synchronization information of the first terminal device and the second terminal device is acquired, which is conducive to synchronization calibration of the first terminal device or the second terminal device. In addition, the third terminal device is positioned based on the synchronization information, which helps to improve the accuracy of positioning of the third terminal device.

In some embodiments, the first information may include at least one of: information associated with one or more synchronization sources of at least one of the first terminal device and the second terminal device, time difference information associated with at least one of the first terminal device and the second terminal device, and round-trip delay between the first terminal device and the second terminal device.

In some embodiments, the information associated with the one or more synchronization sources may include at least one of: a type of the one or more synchronization sources, a coverage of the one or more synchronization sources, a synchronization connection status of the one or more synchronization sources, cell identity information corresponding to the one or more synchronization sources, and synchronization accuracy information of the one or more synchronization sources.

The type of the one or more synchronization sources may for example include the above-mentioned base stations, GNSS, and synchronization reference terminal nodes.

In some embodiments, the coverage or coverage status of a synchronization source may indicate the terminal devices that may be synchronized to the synchronization source. In other words, based on the coverage of the synchronization source, it can be determined whether a target device is within the coverage of the synchronization source. For example, when the first terminal device is within the coverage of the synchronization source of the second terminal device, the first terminal device and the second terminal device may be synchronized to a same synchronization source. Based on this, the synchronization information of the first terminal device and/or the second terminal device may be requested from the synchronization source, thereby reducing the delay in acquiring the synchronization information.

When the synchronization source is a synchronization reference terminal device, the synchronization connection status of the synchronization source may include direct connection of the synchronization source with the base station or GNSS, or indirect connection of the synchronization source with the base station or GNSS. The indirect connection herein may refer to that the synchronization source is connected to the base station or GNSS through other synchronization reference terminal devices. In some embodiments, the synchronization connection status based on synchronization source may determine the way of interacting with the synchronization source, the resources interacted with the synchronization source, the source devices of the synchronization information, and the like. For example, when the synchronization source is a synchronization reference terminal device, and the synchronization source of the synchronization reference terminal device is a base station, the information relevant to the synchronization reference terminal device may be acquired from the base station, and the information, such as synchronization information, relevant to a terminal device synchronized to the synchronization reference terminal device may be acquired from the synchronization reference terminal.

When the synchronization source is a base station, the synchronization source information may further include identity information of the cell corresponding to the synchronization source. With the identity information of the cell, it can be determined whether the device of which synchronization information is to be acquired is synchronized with the cell or within the coverage of the cell, which helps to reduce the delay in acquiring synchronization information. For example, when the first terminal device and the second terminal device are synchronized to a same cell, the synchronization information of the first terminal device and the second terminal device can be acquired using one interaction, thereby improving efficiency and reducing processing delay.

As mentioned above, the synchronization source can acquire synchronization information of the devices that are synchronized to the synchronization source using synchronization estimation. However, due to differences in hardware processing capabilities and the complexity of synchronization algorithms, the synchronization accuracy acquired by the synchronization sources also varies. For example, due to the limitation of processing capacity of the processor, when the synchronization source performs synchronization estimation, the estimated synchronization accuracy may be on the order of timing advance (TA) sampling interval. When the subcarrier spacing is 15kHz, the distance estimation error corresponding to the TA sampling interval is about 80 meters.

Thus, the information associated with the one or more synchronization sources may further include synchronization accuracy information, which helps determine the magnitude or range of synchronization errors. For example, in positioning scenarios, the magnitude or range of positioning errors, as well as whether the positioning errors meet the usage requirements can be determined based on synchronization accuracy information.

In some embodiments, the synchronization accuracy information includes an accuracy unit of a synchronization estimation, and the accuracy unit includes one or more of: an integer multiple of a sampling interval, nanosecond (ns),

microsecond ($\mu$s), and millisecond (ms).

However, in some scenarios, the synchronization accuracy of the synchronization source cannot meet the usage requirements or does not meet the expected accuracy. For example, the positioning error of 80 meters corresponding to the above-mentioned subcarrier spacing of 15kHz may not meet the usage requirements. In this case, the positioning results may be further processed based on synchronization accuracy information to obtain higher positioning accuracy.

In some embodiments, the first device may perform the following operations (including operations 1 to 5 as follows) to process the positioning results of the third terminal device, in order to improve the accuracy of the positioning results or obtain higher positioning accuracy.

At operation 1, the first device divides a first synchronization quantization interval into M equal portions to obtain M second synchronization quantization intervals. The first synchronization quantization interval corresponds to the synchronization accuracy of the synchronization source. When the synchronization accuracy of the first terminal device is different from that of the second terminal device, the synchronization quantization interval corresponding to the synchronization accuracy of the first terminal device may be used as the first synchronization quantization interval, or the synchronization quantization interval corresponding to the synchronization accuracy of the second terminal device may be used as the first synchronization quantization interval. In some embodiments, the synchronization quantization interval corresponding to the higher one of the synchronization accuracy of the first terminal device and the synchronization accuracy of the second terminal device may be used as the first synchronization quantization interval, which helps to further improve the accuracy of positioning.

At operation 2, a respective assumed synchronization value for each second synchronization quantization interval of the M second synchronization quantization intervals is determined.

At operation 3, positioning calculation is performed based on assumed synchronization values to obtain estimated position coordinates $\widetilde{p_j}$, (j=1, 2, ..., M).

At operation 4, an estimation error $e_j$ is calculated using a following formula:

$$e_j = \frac{1}{N}\sum_{i=1}^{N}(\left|\widetilde{p_j} - \widetilde{x_i}\right| - d_{j,i}), \quad (j = 1,2,\ldots\ldots,\mathrm{M}).$$

N represents a number of terminal devices that send pilot signals to the third terminal device or measure pilot signals sent by the third terminal device, such as the number of anchor terminal devices participating in sidelink positioning of third terminal devices; $\widetilde{x_i}$ represents position coordinates of an i-th terminal device that send pilot signals to the third terminal device or measure pilot signals sent by the third terminal device, such as the position coordinates of an anchor terminal device participating in sidelink positioning of third terminal devices; $d_{j,i}$ represents a measured distance between a target terminal device (such as a third terminal device) and the i-th anchor terminal device. $e_j$ reflects the error between the measured distance and the estimated distance. When the average deviation between the estimated distance and the measured distance for each anchor terminal device is relatively large, it is usually due to a relatively great deviation in the estimated position. Accordingly, when the average deviation between the estimated distance and the measured distance for each anchor terminal device is relatively small, the error in the estimated the position is usually relatively small.

As mentioned above, the first terminal device and the second terminal device are terminal devices that send pilot signals to the third terminal device or measure the pilot signals sent by the third terminal device. Therefore, the above N may have a value of 2. $\widetilde{x_1}$ may represent the position coordinates of the first terminal device, and $\widetilde{x_2}$ may represent the position coordinates of the second terminal device.

At operation 5, position coordinates corresponding to a minimum value of the estimation error $e_j$ are determined as a positioning result. A value of the estimation error $e_j$ is minimized in response to a value of j being

$$\left\{j\left|\min_{j} e_j, (j = 1,2,\ldots\ldots,\mathrm{M}); \right. \right\}$$ . For example, when a value of j is 2, the estimation error $e_2$ has the minimum

value. In this case, $\widetilde{p_2}$ of the above-estimated position coordinates is determined as the position of the third terminal device, namely the positioning result.

As mentioned above, the first information may further include time difference information. In some embodiments, the time difference information may include at least one of: a synchronization time difference between the first terminal device and the second terminal device, a time difference between timing of the first terminal device and timing of a first synchronization source, and a time difference between timing of the second terminal device and timing of a second synchronization source. The first terminal device is synchronized with the first synchronization source, and the second terminal device is synchronized with the second synchronization source.

The first synchronization source may be the same as or different from the second synchronization source. In some embodiments, the content of the time difference information may vary depending on whether the synchronization sources are the same.

When the first synchronization source is the same as the second synchronization source, in other words, the first terminal device and the second terminal device are synchronized to a same synchronization source, this synchronization source can acquire the synchronization time difference between the first terminal device and the second terminal device. Therefore, in this case, the time difference information may include the synchronization time difference between the first terminal device and the second terminal device. In this way, transmission resources and computational overhead can be saved.

When the first synchronization source is different from the second synchronization source, in other words, the first terminal device and the second terminal device are respectively synchronized to synchronization sources different from each other, the first synchronization source can acquire the synchronization information of the first terminal device, but cannot directly acquire the synchronization information of the second terminal device. Similarly, the second synchronization source can acquire the synchronization information of the second terminal device, but cannot directly acquire the synchronization information of the first terminal device.

However, the first synchronization source can acquire the time difference information (also known as timing offset) between the timing of the first terminal device and the sending or receiving timing of the first synchronization source, and the second synchronization source can acquire the time difference information between the timing of the second terminal device and the sending or receiving timing of the second synchronization source.

Based on this, the time difference information may include the time difference between the timing of the first terminal device and the timing of the first synchronization source, and/or the time difference between the timing of the second terminal device and the timing of the second synchronization source. The synchronization source timing herein may be, for example, the sending timing of the synchronization source or the receiving timing of the synchronization source. In some embodiments, the first device may determine the time difference information of the first terminal device and the second terminal device based on the time difference between the timing of the first terminal device and the timing of the first synchronization source, and on the time difference between the timing of the second terminal device and the timing of the second synchronization source.

In some embodiments, the first information may further include the timing of the first synchronization source and/or the timing of the second synchronization source. For example, when the time difference information includes the time difference between the timing of the first terminal device and the timing of the first synchronization source, and/or the time difference between the timing of the second terminal device and the timing of the second synchronization source, the first information may further include the timing of the first synchronization source and/or the timing of the second synchronization source. The timing of the synchronization source herein may be the same as the timing types of synchronization sources in the time difference information. For example, when the corresponding timing of synchronization source in the time difference information is sending timing, then the corresponding timing of synchronization source in the first information is also the sending timing. In this way, even if the time difference information does not include the time difference between the first terminal device and the second terminal device, other devices such as the first device can determine the time difference between the first terminal device and the second terminal device based on the first information.

In some embodiments, the timing of the synchronization source, such as the sending timing, may be reported relative to a reference time. The reference time may be absolute time, or the time of a specific reference source, or designated time. For example, the designated time may be designated by the first device.

In some embodiments, the first information may be reported to the first device by one or more of: the first terminal device, the second terminal device, the third terminal device, the first synchronization source, the second synchronization source, a network device corresponding to the first synchronization source, and a network device corresponding to the second synchronization source.

For example, when the first terminal device and the second terminal device are synchronized to a same synchronization source, the first information may be reported to the first device by the synchronization source.

For example, when the first terminal device is synchronized to the first synchronization source, the second terminal device is synchronized to the second synchronization source, and the first synchronization source is different from the second synchronization source, some information in the first information, such as the information associated with the first terminal device, may be reported to the first device by the first synchronization source, and some information in the first information, such as the information associated with the second terminal device, may be reported to the first device by the second synchronization source.

For example, when the first synchronization source is a synchronization reference terminal device synchronized to a network device, some information in the first information may be reported to the first device by the network device corresponding to the first synchronization source, and some information in the first information may be reported to the first device by the network device corresponding to the second synchronization source.

In some embodiments, the first information may be directly reported to the first device by one or more of the aforementioned devices, or be indirectly reported to the first device.

For example, the time difference information between the timing of the first terminal device and the timing of the first synchronization source may be directly reported to the first device by the first synchronization source, or the time difference information may be reported to the first terminal device by the first synchronization source first, and then reported to the first device by the first terminal device. When the first synchronization source is a synchronization reference terminal device synchronized to a base station, the time difference information between the timing of the first terminal device and the timing of the first synchronization source may also be reported by the first synchronization source to the corresponding network device, and then reported by the network device to the first device.

For example, the first synchronization source and the second synchronization source may report the synchronization information of the first terminal device and/or the synchronization information of the second terminal device to a specific device, such as a specific terminal device, and then the specific terminal device reports the first information to the first device. This specific terminal device may be either the first terminal device or the second terminal device. In some cases, the specific terminal device may also be the target terminal device involved in sidelink positioning, such as the third terminal device mentioned above.

The reporting of the first information may include active reporting and reporting as requested. The active reporting herein may refer to the reporting of the first information without receiving a request to report the first information.

In some embodiments, the reporting of the first information may be reporting as requested. For example, before the first device receives the first information, the first device may send a second information configured to request target synchronization information. For example, in the sidelink positioning scenario, target synchronization information may refer to one or more of the synchronization information associated with the terminal devices participating in the sidelink positioning.

In some embodiments, the second information may include at least one of: the target synchronization information, a device identifier of a device associated with the target synchronization information, and expected synchronization accuracy information corresponding to the target synchronization information. For example, the target synchronization information may include the synchronization information of the first terminal device and/or the synchronization information of the second terminal device. For example, the second information may include the device identifier of the first terminal device and/or the second terminal device. The target synchronization information and device identifier herein may serve as the credential for reporting the first information. For example, the second information may include expected synchronization accuracy information corresponding to the target synchronization information. When the target synchronization information includes the synchronization information of the first terminal device and/or the synchronization information of the second terminal device, the expected synchronization accuracy information may include expected synchronization accuracy of the synchronization information of the first terminal device and/or expected synchronization accuracy of the synchronization information of the second terminal device. Reporting the first information based on the expected synchronization accuracy can help improve the effectiveness of the positioning results.

The receiving device for the second information mentioned above may be one or more of the above-mentioned various devices that report the first information. When the first information is reported by the synchronization source of the first terminal device and/or the second terminal device, that is, the first synchronization source and/or the second synchronization source, before sending the second information, the first device needs to know the synchronization source and/or the information associated with the synchronization source of the first terminal device and/or the second terminal device. In some embodiments, the first terminal device and/or the second terminal device may report information associated with the first synchronization source and/or the second synchronization source to the first device when interacting with the first device about the positioning assistance information.

Then, the first device may send the second information to the first synchronization source and/or the second synchronization source based on the information associated with the synchronization source, in order to request sending of the first information. Reference may be made to the above illustration for the information associated with the synchronization source, and for simplicity, it will not be repeated here.

In some embodiments, the reporting of the first information may be active reporting. For example, the first information may be actively reported to the first device by the first synchronization source and/or the second synchronization source. For example, the first information may be actively reported to the first device by the first synchronization source and/or the second synchronization source through the first terminal device and/or the second terminal device. That is to say, the first synchronization source and/or the second synchronization source may first report the first information to the first terminal device and/or the second terminal device, and then the first terminal device and/or the second terminal device may actively report the first information to the first device.

In some embodiments, in response to the first synchronization source and/or the second synchronization source acquiring the synchronization information of the first terminal device and/or the second terminal device, the first synchronization source and/or the second synchronization source may report the first information. In order to save the cost of transmission resources, the first synchronization source and/or the second synchronization source may periodically report the first information. The reporting cycle may be determined based on usage requirements, such as positioning frequency, and the present disclosure does not limit it. In this way, the synchronization information of the first terminal device and/or the second terminal device can be acquired in a timely manner, which helps to reduce the delay of positioning.

In some embodiments, in response to receiving notification information that it is going to position the third terminal device, or receiving notification information that the first terminal device and/or the second terminal device are going to participate in positioning, the first synchronization source and/or the second synchronization source may report the first information. In order to ensure the real-time characteristic and effectiveness of the synchronization information, in response to receiving the above notification, the first synchronization source and/or the second synchronization source may perform synchronization estimation on the first terminal device and/or the second terminal device, and then report the first information based on the synchronization estimation result. The notification information may for example be sent by the third terminal device, or by the first terminal device and/or the second terminal device.

The above notification information may include, for example, the identifier of the terminal devices participating in positioning. As an example, the notification information may include the identifier of the anchor terminal device and/or the identifier of the target terminal device. For example, the above notification information may include the time when the target terminal device is positioned, so that the first synchronization source and/or the second synchronization source can determine the timing of reporting the first information. For example, the above notification information may include accuracy requirement information of the target terminal device, such as synchronization accuracy requirement and/or accuracy requirements of the positioning results. Based on the accuracy requirements of the positioning results, the synchronization accuracy requirements can be calculated. In this way, when the synchronization source can achieve a plurality of synchronization accuracies, the synchronization accuracy adopted by the synchronization source can be determined based on the accuracy requirement information of the target terminal device.

When active reporting of the first information is adopted, the target terminal device, such as the third terminal device, may report the first information to the first device during positioning configuration, such as reporting the first information to the first device in auxiliary data information, thereby further reducing the delay of positioning.

It is noted that the method provided in the embodiments of the present disclosure can be applied to acquire synchronization information between the anchor terminal devices participating in sidelink positioning, or to acquire synchronization information between the anchor terminal device and the target terminal device participating in sidelink positioning. That is to say, the first terminal device and the second terminal device may also be respectively the anchor terminal device and the target terminal device participating in sidelink positioning.

The method embodiments of the present disclosure are illustrated in detail above in conjunction with FIGS. 1 to 11. In the following, the device embodiments of the present disclosure will be illustrated in detail below in conjunction with FIGS. 12 to 15. It should be understood that the illustration of the method embodiments corresponds to the illustration of the device embodiments. Therefore, reference may be made to the method embodiments hereinbefore for the content not illustrated in detail.

FIG. 12 is a structural diagram of a communication device provided in some embodiments of the present disclosure. The communication device 1200 in FIG. 12 may be the first device mentioned above. The communication device 1200 may include a reception module 1210 and a positioning module 1220.

The reception module 1210 is configured to receive first information configured to indicate at least one of synchronization information of a first terminal device and synchronization information of a second terminal device.

The positioning module 1220 is configured to position a third terminal device based on the first information.

In some embodiments, the first information includes at least one of: information associated with one or more synchronization sources of at least one of the first terminal device and the second terminal device, time difference information associated with at least one of the first terminal device and the second terminal device, and round-trip delay between the first terminal device and the second terminal device.

In some embodiments, the information associated with the one or more synchronization sources includes at least one of: a type of the one or more synchronization sources, a coverage of the one or more synchronization sources, a synchronization connection status of the one or more synchronization sources, cell identity information corresponding to the one or more synchronization sources, and synchronization accuracy information of the one or more synchronization sources.

In some embodiments, the synchronization accuracy information includes an accuracy unit of a synchronization estimation, and the accuracy unit includes one or more of: an integer multiple of a sampling interval, nanosecond (ns), microsecond ($\mu$s), and millisecond (ms).

In some embodiments, positioning the third terminal device based on the first information by the first device, includes: in response to a synchronization accuracy not meeting a preset requirement, performing, by the first device, operations to position the third terminal device. The operations include: dividing, by the first device, a first synchronization quantization interval into M equal portions to obtain M second synchronization quantization intervals, where the first synchronization quantization interval corresponds to the synchronization accuracy; determining a respective assumed synchronization value for each second synchronization quantization interval of the M second synchronization quantization intervals; performing positioning calculation based on assumed synchronization values to obtain estimated position coordinates $\widetilde{p}_J$ , (j=1, 2, ..., M); calculating an estimation error $e_j$ using a following formula:

$$e_j = \frac{1}{N}\sum_{i=1}^{N}\left(\left|\widetilde{p}_J - \widetilde{x}_i\right| - d_{j,i}\right)$$ , (j = 1,2, ......, M); and determining position coordinates corresponding to a minimum value of the estimation error $e_j$ as a positioning result, where a value of the estimation error $e_j$ is minimized in response to a value of j being $\left\{j\middle| \min_j e_j , (j = 1,2,\ldots\ldots,M);\ \right\}$ . N represents a number of terminal devices that send pilot signals to the third terminal device or measure pilot signals sent by the third terminal device, $\widetilde{x}_i$ represents position coordinates of an i-th terminal device that send pilot signals to the third terminal device or measure pilot signals sent by the third terminal device, $d_{j,i}$ represents a measurement result of a distance between a position of the third terminal device and the i-th terminal device that send pilot signals to the third terminal device or measure pilot signals sent by the third terminal device, and the pilot signals are configured for positioning.

In some embodiments, the time difference information includes at least one of: a synchronization time difference between the first terminal device and the second terminal device, a time difference between timing of the first terminal device and timing of a first synchronization source, and a time difference between timing of the second terminal device and timing of a second synchronization source. The first terminal device is synchronized with the first synchronization source, and the second terminal device is synchronized with the second synchronization source.

In some embodiments, the first synchronization source is the same as the second synchronization source.

In some embodiments, the first information further includes at least one of the timing of the first synchronization source and the timing of the second synchronization source.

In some embodiments, the first information is reported to the first device by one or more of: the first terminal device, the second terminal device, the first synchronization source, the second synchronization source, a network device corresponding to the first synchronization source, and a network device corresponding to the second synchronization source. The first terminal device is synchronized with the first synchronization source, and the second terminal device is synchronized with the second synchronization source.

In some embodiments, the first information is actively reported to the first device by at least one of the first synchronization source and the second synchronization source, and/or the first information is actively reported to the first device by at least one of the first synchronization source and the second synchronization source through at least one of the first terminal device and the second terminal device.

In some embodiments, the communication device further includes a sending module configured to send second information before the first device receives the first information. The second information is configured to request target synchronization information, and the target synchronization information includes at least one of the synchronization information of the first terminal device and the synchronization information of the second terminal device.

In some embodiments, the second information includes at least one of: the target synchronization information, a device identifier of a device associated with the target synchronization information, and expected synchronization accuracy information corresponding to the target synchronization information.

In some embodiments, the first terminal device and the second terminal device function as reference terminal devices participating in sidelink positioning, and the third terminal device functions as a target terminal device participating in sidelink positioning.

In some embodiments, the first device is a positioning server.

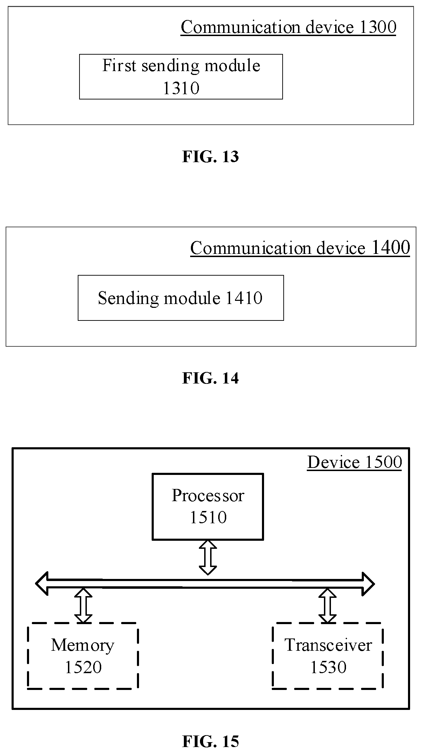

FIG. 13 is a structural diagram of another communication device provided in some embodiments of the present disclosure. The communication device 1300 in FIG. 13 may be the first terminal device mentioned above.

The communication device 1300 may include a first sending module 1310 configured to send first information to a first device. The first information is configured to indicate at least one of synchronization information of the first terminal device and synchronization information of a second terminal device, and is configured for the first device to position a third terminal device.

In some embodiments, the communication device further includes: a communication module configured to send pilot signals to the third terminal device and/or receive pilot signals sent by the third terminal device. The pilot signals are configured for sidelink positioning.

In some embodiments, the first information includes at least one of: information associated with one or more synchronization sources of at least one of the first terminal device and the second terminal device, time difference information associated with at least one of the first terminal device and the second terminal device, and round-trip delay between the first terminal device and the second terminal device.

In some embodiments, the information associated with the one or more synchronization sources includes at least one of: a type of the one or more synchronization sources, a coverage of the one or more synchronization sources, a synchronization connection status of the one or more synchronization sources, cell identity information corresponding to the one or more synchronization sources, and synchronization accuracy information of the one or more synchronization sources.

In some embodiments, the synchronization accuracy information includes an accuracy unit of a synchronization estimation, and the accuracy unit includes one or more of: an integer multiple of a sampling interval, nanosecond (ns), microsecond (μs), and millisecond (ms).

In some embodiments, the time difference information includes at least one of: a synchronization time difference between the first terminal device and the second terminal device, a time difference between timing of the first terminal device and timing of a first synchronization source, and a time difference between timing of the second terminal device and timing of a second synchronization source. The first terminal device is synchronized with the first synchronization source, and the second terminal device is synchronized with the second synchronization source.

In some embodiments, the first synchronization source is the same as the second synchronization source.

In some embodiments, the first information further includes at least one of the timing of the first synchronization source and the timing of the second synchronization source.

In some embodiments, sending the first information to the first device by the first terminal device, includes: receiving, by the first terminal device, the first information sent by at least one of a first synchronization source and a second synchronization source; and sending, by the first terminal device, the first information to the first device. The first terminal device is synchronized with the first synchronization source, and the second terminal device is synchronized with the second synchronization source.

In some embodiments, the communication device further includes a second sending module configured to send third information before the first terminal device receives the first information sent by at least one of the first synchronization source and the second synchronization source. The third information is configured to notify at least one of the first synchronization source and the second synchronization source to report the first information.

In some embodiments, the communication device further includes a reception module configured to receive second information sent by the first device before the first terminal device sends the first information to the first device. The second information is configured to request target synchronization information including at least one of the synchronization information of the first terminal device and the synchronization information of the second terminal device.

In some embodiments, the second information includes at least one of: the target synchronization information, a device identifier of a device associated with the target synchronization information, and expected synchronization accuracy information corresponding to the target synchronization information.

In some embodiments, the first terminal device and the second terminal device function as reference terminal devices participating in sidelink positioning, and the third terminal device functions as a target terminal device participating in sidelink positioning.

In some embodiments, the first device is a positioning server.

FIG. 14 is a structural diagram of still another communication device provided in some embodiments of the present disclosure. The communication device 1400 in FIG. 14 may be the second terminal device mentioned above.

The communication device 1400 may include a sending module 1410 configured to send first information to a first device. The first information is configured to indicate at least one of synchronization information of a first terminal device and synchronization information of the second terminal device, and is configured for the first device to position a third terminal device.

In some embodiments, the communication device further includes a communication module configured to send pilot signals to the third terminal device and/or receive pilot signals sent by the third terminal device. The pilot signals are configured for sidelink positioning.

In some embodiments, the first information includes at least one of: information associated with one or more synchronization sources of at least one of the first terminal device and the second terminal device, time difference information associated with at least one of the first terminal device and the second terminal device, and round-trip delay between the first terminal device and the second terminal device.

In some embodiments, the information associated with the one or more synchronization sources includes at least one of: a type of the one or more synchronization sources, a coverage of the one or more synchronization sources, a synchronization connection status of the one or more synchronization sources, cell identity information corresponding to the one or more synchronization sources, and synchronization accuracy information of the one or more synchronization sources.

In some embodiments, the synchronization accuracy information includes an accuracy unit of a synchronization estimation, and the accuracy unit includes one or more of: an integer multiple of a sampling interval, nanosecond (ns), microsecond (μs), and millisecond (ms).

In some embodiments, the time difference information includes at least one of: a synchronization time difference between the first terminal device and the second terminal device, a time difference between timing of the first terminal device and timing of a first synchronization source, and a time difference between timing of the second terminal device and timing of a second synchronization source. The first terminal device is synchronized with the first synchronization source, and the second terminal device is synchronized with the second synchronization source.

In some embodiments, the first synchronization source is the same as the second synchronization source.

In some embodiments, the first information further includes at least one of the timing of the first synchronization source and the timing of the second synchronization source.

In some embodiments, sending the first information to the first device by the second terminal device, includes: receiving, by the second terminal device, the first information sent by at least one of a first synchronization source and a second synchronization source; and sending, by the second terminal device, the first information to the first device. The first terminal device is synchronized with the first synchronization source, and the second terminal device is synchronized with the second synchronization source.

In some embodiments, the communication device further includes a reception module configured to receive second information sent by the first device before the second terminal device sends the first information to the first device. The second information is configured to request target synchronization information including at least one of the synchronization information of the first terminal device and the synchronization information of the second terminal device.

In some embodiments, the second information includes at least one of: the target synchronization information, a device identifier of a device associated with the target synchronization information, and expected synchronization accuracy information corresponding to the target synchronization information.

In some embodiments, the first terminal device and the second terminal device function as reference terminal devices participating in sidelink positioning, and the third terminal device functions as a target terminal device participating in sidelink positioning.

In some embodiments, the first device is a positioning server.

FIG. 15 is a schematic structural diagram of a device according to some embodiments of the present disclosure. The dashed lines in FIG. 15 indicate that the unit or module is optional. The device 1500 may be used to implement the method illustrated in the above method embodiments. The device 1500 may be a chip or a terminal device.

The device 1500 may include at least one processor 1510. The processor 1510 may support the device 1500 to implement the method illustrated in the above method embodiments. The processor 1510 may be a general-purpose processor or a dedicated processor. For example, the processor may be a central processing unit (CPU). Alternatively, the processor may be other general-purpose processor, a digital signal processor (DSP), an application specific integrated circuits (ASIC), a field programmable gate arrays (FPGA), or other programmable logic device, a discrete gate or transistor logic device, a discrete hardware component or the like. A general-purpose processor may be a microprocessor or any conventional processor.

The device 1500 may further include at least one memory 1520. The memory 1520 is configured to store programs, which, when executed by the processor 1510, cause the processor 1510 to implement operations of the method illustrated in the above embodiments for method. The memory 1520 may be independent of the processor 1510 or be integrated in the processor 1510.

The device 1500 may further include a transceiver 1530. The processor 1510 may communicate with other devices or chips through the transceiver 1530. For example, the processor 1510 may transmit and receive data with other devices or chips through the transceiver 1530.

Some embodiments of the present disclosure provide a non-transitory computer readable storage medium, configured to store programs. The non-transitory computer readable storage medium is applicable to the communication device provided in the embodiments of the present disclosure. When the programs are executed, the programs cause a computer to implement operations of the method implemented by the communication device in the embodiments of the present disclosure.

Some embodiments of the present disclosure provide a computer program product including programs. The computer program product is applicable to the communication device provided in the embodiments of the present disclosure. When the programs are executed, cause a computer to implement operations of the method implemented by the communication device according to the embodiments of the present disclosure.

Some embodiments of the present disclosure provide a computer program. The computer program is applicable to the communication device provided in the embodiments of the present disclosure. When the computer program is executed, cause a computer to implement operations of the method implemented by the communication device according to the embodiments of the present disclosure.

It should be understood that the terms "system" and "network" in the present disclosure may be interchangeably used. In addition, the terms used in the present disclosure are only intended to illustrate the specific embodiments of the present disclosure, and are not intended to limit the present disclosure. The terms "first", "second", "third" and "fourth" in the description, claims, and accompanying drawings of the present disclosure are used to distinguish different objects, rather than to describe a specific order. In addition, the terms "including" and "having", as well as any variations of them, are intended to cover non-exclusive inclusions.

In the embodiments of the present disclosure, the "indication" mentioned may be a direct indication, an indirect indication, or a representation of a related relationship. For example, A indicates B, which may indicate that A directly indicates B, for example, B may be obtained through A; or that A indirectly indicates B, for example, A indicates C, and B may be obtained through C; or that there is an association between A and B.

In the embodiments of the present disclosure, "B corresponding to A" indicates that B is associated with A, and B can be determined based on A. However, it should be understood that determining B based on A does not mean determining B solely based on A, and B can also be determined based on A and/or other information.

In the embodiments of the present disclosure, the term "corresponding to" may indicate a direct or indirect correspondence between two objects, a correlation between two objects, or relationships such as indicating and being indicated, configuring and being configured, or the like.

In the embodiments of the present disclosure, "pre-defined" or "pre-configuration" may be implemented by pre-saving corresponding codes, tables, or other methods that can be used to indicate relevant information in devices (such as terminal devices and network devices). The present disclosure does not limit the specific implementation. For example, pre-defined may refer to "defined in protocols".

In the embodiments of the present disclosure, "protocol" may refer to standard protocols in the field of communication, such as LTE protocol, NR protocol, and related protocols applied in future communication systems. The present disclosure does not limit this.

In the embodiments of the present disclosure, the term "and/or" is simply a description of the association relationship between associated objects, indicating that there may be three types of relationships. For example, A and/or B may represent the situations of only A, A and B, and only B. In addition, the character "/" in the present disclosure generally indicates that the associated objects have an "or" relationship.

In the embodiments of the present disclosure, the sequence numbers of the above processes do not imply the order of execution. The execution order of the processes should be determined based on their functions and internal logics, and should not constitute any limitations on the implementation process of the embodiments of the present disclosure.

In the embodiments of the present disclosure, it should be understood that the disclosed systems, devices, and methods may be implemented in other ways. For example, the embodiments for device described above are only exemplary. For example, the division of the units is only a logical functional division, and there may be other division manners in actual implementation. For example, a plurality of units or components may be combined or integrated into another system, or some features may be ignored or not executed. On the other hand, the shown or discussed coupling or direct coupling or communication connection between each other may be indirect coupling or communication connection through some interfaces, devices or units, which may be in electrical, mechanical or other forms.

The units described as separate components may be or may not be physically separated, and the components shown as units may be or may not be physical units, that is, they may be located in one place or distributed across multiple network units. Some or all of the units may be selected according to actual needs to achieve the purpose of the present disclosure.

All or some of the foregoing embodiments may be implemented by using software, hardware, firmware, or any combination thereof. When software is used to implement embodiments, the foregoing embodiments may be implemented completely or partially in a form of computer program products. A computer program product includes one or more computer instructions. When the computer program instructions are loaded and executed on a computer, the procedures or functions according to the embodiments of the present disclosure are completely or partially generated. The computer may be a general-purpose computer, a dedicated computer, a computer network, or other programmable apparatuses. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (DSL)) manner or a wireless (such as infrared, wireless, and microwave) manner. The computer-readable storage medium may be any usable medium readable by the computer, or a data storage device, such as a server or a data center formed by integrating one or more usable medium. The usable medium may be a magnetic medium (for example, a floppy disk, a hard disk, or a magnetic tape), an optical medium (for example, a digital video disc (DVD)), a semiconductor medium (for example, a solid-state drive (SSD)), or the like.

The foregoing descriptions are merely specific implementations of the present disclosure, but the protection scope of the present disclosure is not limited thereto. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1. A method for sidelink communication, comprising:

   receiving, by a first device, first information configured to indicate at least one of synchronization information of a first terminal device and synchronization information of a second terminal device; and
   positioning, by the first device, a third terminal device based on the first information.

2. The method according to claim 1, wherein the first information comprises at least one of:

   information associated with one or more synchronization sources of at least one of the first terminal device and the second terminal device;
   time difference information associated with at least one of the first terminal device and the second terminal device; and
   round-trip delay between the first terminal device and the second terminal device.

3. The method according to claim 2, wherein the information associated with the one or more synchronization sources comprises at least one of:

   a type of the one or more synchronization sources;
   a coverage of the one or more synchronization sources;
   a synchronization connection status of the one or more synchronization sources;
   cell identity information corresponding to the one or more synchronization sources; and
   synchronization accuracy information of the one or more synchronization sources.

4. The method according to claim 3, wherein the synchronization accuracy information comprises an accuracy unit of a synchronization estimation, and the accuracy unit comprises one or more of:

   an integer multiple of a sampling interval;
   nanosecond (ns);
   microsecond ($\mu$s); and
   millisecond (ms).

5. The method according to claim 3 or claim 4, wherein positioning, by the first device, the third terminal device based on the first information, comprises:

   in response to a synchronization accuracy not meeting a preset requirement, performing, by the first device, operations to position the third terminal device, wherein the operations comprise:

   dividing, by the first device, a first synchronization quantization interval into M equal portions to obtain M second synchronization quantization intervals, wherein the first synchronization quantization interval corresponds to the synchronization accuracy;
   determining a respective assumed synchronization value for each second synchronization quantization interval of the M second synchronization quantization intervals;
   performing positioning calculation based on assumed synchronization values to obtain estimated position coordinates $\widetilde{p}_j$, (j=1, 2, ..., M);
   calculating an estimation error $e_j$ using a following formula:

   $$e_j = \frac{1}{N}\sum_{i=1}^{N}\left(\left|\widetilde{p}_j - \widetilde{x}_i\right| - d_{j,i}\right), \quad (j = 1,2, \dots\dots, M);$$

   and
   determining position coordinates corresponding to a minimum value of the estimation error $e_j$ as a positioning result, wherein a value of the estimation error $e_j$ is minimized in response to a value of j being

   $$\left\{j \middle| \min_j e_j, (j = 1,2, \dots\dots, M); \right\};$$

wherein N represents a number of terminal devices that send pilot signals to the third terminal device or measure pilot signals sent by the third terminal device, $\widetilde{x}_i$ represents position coordinates of an i-th terminal device that send pilot signals to the third terminal device or measure pilot signals sent by the third terminal device, $d_{j,i}$ represents a measurement result of a distance between a position of the third terminal device and the i-th terminal device that send pilot signals to the third terminal device or measure pilot signals sent by the third terminal device, and the pilot signals are configured for positioning.

6. The method according to any one of claims 2 to 5, wherein the time difference information comprises at least one of:

   a synchronization time difference between the first terminal device and the second terminal device;
   a time difference between timing of the first terminal device and timing of a first synchronization source; and
   a time difference between timing of the second terminal device and timing of a second synchronization source;
   wherein the first terminal device is synchronized with the first synchronization source, and the second terminal device is synchronized with the second synchronization source.

7. The method according to claim 6, wherein the first synchronization source is the same as the second synchronization source.

8. The method according to claim 6 or claim 7, wherein the first information further comprises at least one of the timing of the first synchronization source and the timing of the second synchronization source.

9. The method according to any one of claims 1 to 8, wherein the first information is reported to the first device by one or more of:

   the first terminal device;
   the second terminal device;
   the first synchronization source;
   the second synchronization source;
   a network device corresponding to the first synchronization source; and
   a network device corresponding to the second synchronization source;
   wherein the first terminal device is synchronized with the first synchronization source, and the second terminal device is synchronized with the second synchronization source.

10. The method according to claim 9, wherein:

    the first information is actively reported to the first device by at least one of the first synchronization source and the second synchronization source; and/or
    the first information is actively reported to the first device by at least one of the first synchronization source and the second synchronization source through at least one of the first terminal device and the second terminal device.

11. The method according to claim 9, before receiving, by the first device, the first information, the method further comprising:
    sending, by the first device, second information configured to request target synchronization information, wherein the target synchronization information comprises at least one of the synchronization information of the first terminal device and the synchronization information of the second terminal device.

12. The method according to claim 11, wherein the second information comprises at least one of:

    the target synchronization information;
    a device identifier of a device associated with the target synchronization information; and
    expected synchronization accuracy information corresponding to the target synchronization information.

13. The method according to any one of claims 1 to 12, wherein the first terminal device and the second terminal device function as reference terminal devices participating in sidelink positioning, and the third terminal device functions as a target terminal device participating in sidelink positioning.

14. The method according to any one of claims 1 to 13, wherein the first device is a positioning server.

**15.** A method for sidelink communication, comprising:

sending, by a first terminal device, first information to a first device, wherein the first information is configured to indicate at least one of synchronization information of the first terminal device and synchronization information of a second terminal device, and is configured for the first device to position a third terminal device.

**16.** The method according to claim 15, further comprising:

sending, by the first terminal device, pilot signals to the third terminal device; and/or
receiving, by the first terminal device, pilot signals sent by the third terminal device;
wherein the pilot signals are configured for sidelink positioning.

**17.** The method according to claim 15 or claim 16, wherein the first information comprises at least one of:

information associated with one or more synchronization sources of at least one of the first terminal device and the second terminal device;
time difference information associated with at least one of the first terminal device and the second terminal device; and
round-trip delay between the first terminal device and the second terminal device.

**18.** The method according to claim 17, wherein the information associated with the one or more synchronization sources comprises at least one of:

a type of the one or more synchronization sources;
a coverage of the one or more synchronization sources;
a synchronization connection status of the one or more synchronization sources;
cell identity information corresponding to the one or more synchronization sources; and
synchronization accuracy information of the one or more synchronization sources.

**19.** The method according to claim 18, wherein the synchronization accuracy information comprises an accuracy unit of a synchronization estimation, and the accuracy unit comprises one or more of:

an integer multiple of a sampling interval;
nanosecond (ns);
microsecond ($\mu$s); and
millisecond (ms).

**20.** The method according to any one of claims 17 to 19, wherein the time difference information comprises at least one of:

a synchronization time difference between the first terminal device and the second terminal device;
a time difference between timing of the first terminal device and timing of a first synchronization source; and
a time difference between timing of the second terminal device and timing of a second synchronization source;
wherein the first terminal device is synchronized with the first synchronization source, and the second terminal device is synchronized with the second synchronization source.

**21.** The method according to claim 20, wherein the first synchronization source is the same as the second synchronization source.

**22.** The method according to claim 20 or claim 21, wherein the first information further comprises at least one of the timing of the first synchronization source and the timing of the second synchronization source.

**23.** The method according to any one of claims 15 to 22, wherein sending, by the first terminal device, the first information to the first device, comprises:

receiving, by the first terminal device, the first information sent by at least one of a first synchronization source and a second synchronization source; and
sending, by the first terminal device, the first information to the first device;
wherein the first terminal device is synchronized with the first synchronization source, and the second terminal device is synchronized with the second synchronization source.

24. The method according to claim 23, before receiving, by the first terminal device, the first information sent by at least one of the first synchronization source and the second synchronization source, further comprising:
sending, by the first terminal device, third information configured to notify at least one of the first synchronization source and the second synchronization source to report the first information.

25. The method according to claim 23, before sending, by the first terminal device, the first information to the first device, further comprises:
receiving, by the first terminal device, second information sent by the first device, wherein the second information is configured to request target synchronization information comprising at least one of the synchronization information of the first terminal device and the synchronization information of the second terminal device.

26. The method according to claim 25, wherein the second information comprises at least one of:

the target synchronization information;
a device identifier of a device associated with the target synchronization information; and
expected synchronization accuracy information corresponding to the target synchronization information.

27. The method according to any one of claims 15 to 26, wherein the first terminal device and the second terminal device function as reference terminal devices participating in sidelink positioning, and the third terminal device functions as a target terminal device participating in sidelink positioning.

28. The method according to any one of claims 15 to 27, wherein the first device is a positioning server.

29. A method for sidelink communication, comprising:
sending, by a second terminal device, first information to a first device, wherein the first information is configured to indicate at least one of synchronization information of a first terminal device and synchronization information of the second terminal device, and is configured for the first device to position a third terminal device.

30. The method according to claim 29, further comprising:

sending, by the second terminal device, pilot signals to the third terminal device; and/or
receiving, by the second terminal device, pilot signals sent by the third terminal device;
wherein the pilot signals are configured for sidelink positioning.

31. The method according to claim 29 or claim 30, wherein the first information comprises at least one of:

information associated with one or more synchronization sources of at least one of the first terminal device and the second terminal device;
time difference information associated with at least one of the first terminal device and the second terminal device; and
round-trip delay between the first terminal device and the second terminal device.

32. The method according to claim 31, wherein the information associated with the one or more synchronization sources comprises at least one of:

a type of the one or more synchronization sources;
a coverage of the one or more synchronization sources;
a synchronization connection status of the one or more synchronization sources;
cell identity information corresponding to the one or more synchronization sources; and
synchronization accuracy information of the one or more synchronization sources.

33. The method according to claim 32, wherein the synchronization accuracy information comprises an accuracy unit of a synchronization estimation, and the accuracy unit comprises one or more of:

an integer multiple of a sampling interval;
nanosecond (ns);
microsecond ($\mu$s); and
millisecond (ms).

**34.** The method according to any one of claims 31 to 33, wherein the time difference information comprises at least one of:

a synchronization time difference between the first terminal device and the second terminal device;
a time difference between timing of the first terminal device and timing of a first synchronization source; and
a time difference between timing of the second terminal device and timing of a second synchronization source;
wherein the first terminal device is synchronized with the first synchronization source, and the second terminal device is synchronized with the second synchronization source.

**35.** The method according to claim 34, wherein the first synchronization source is the same as the second synchronization source.

**36.** The method according to claim 34 or claim 35, wherein the first information further comprises at least one of the timing of the first synchronization source and the timing of the second synchronization source.

**37.** The method according to any one of claims 29 to 36, wherein sending, by the second terminal device, the first information to the first device, comprises:

receiving, by the second terminal device, the first information sent by at least one of a first synchronization source and a second synchronization source; and
sending, by the second terminal device, the first information to the first device;
wherein the first terminal device is synchronized with the first synchronization source, and the second terminal device is synchronized with the second synchronization source.

**38.** The method according to any one of claims 29 to 37, before sending, by the second terminal device, the first information to the first device, further comprises:
receiving, by the second terminal device, second information sent by the first device, wherein the second information is configured to request target synchronization information comprising at least one of the synchronization information of the first terminal device and the synchronization information of the second terminal device.

**39.** The method according to claim 38, wherein the second information comprises at least one of:

the target synchronization information;
a device identifier of a device associated with the target synchronization information; and
expected synchronization accuracy information corresponding to the target synchronization information.

**40.** The method according to any one of claims 29 to 39, wherein the first terminal device and the second terminal device function as reference terminal devices participating in sidelink positioning, and the third terminal device functions as a target terminal device participating in sidelink positioning.

**41.** The method according to any one of claims 29 to 40, wherein the first device is a positioning server.

**42.** A communication device implemented as a first device, comprising:

a reception module, configured to receive first information configured to indicate at least one of synchronization information of a first terminal device and synchronization information of a second terminal device; and
a positioning module, configured to position a third terminal device based on the first information.

**43.** The communication device according to claim 42, wherein the first information comprises at least one of:

information associated with one or more synchronization sources of at least one of the first terminal device and the second terminal device;
time difference information associated with at least one of the first terminal device and the second terminal device; and
round-trip delay between the first terminal device and the second terminal device.

**44.** The communication device according to claim 43, wherein the information associated with the one or more synchronization sources comprises at least one of:

a type of the one or more synchronization sources;
a coverage of the one or more synchronization sources;
a synchronization connection status of the one or more synchronization sources;
cell identity information corresponding to the one or more synchronization sources; and
synchronization accuracy information of the one or more synchronization sources.

45. The communication device according to claim 44, wherein the synchronization accuracy information comprises an accuracy unit of a synchronization estimation, and the accuracy unit comprises one or more of:

an integer multiple of a sampling interval;
nanosecond (ns);
microsecond ($\mu$s); and
millisecond (ms).

46. The communication device according to claim 44 or claim 45, wherein positioning the third terminal device based on the first information, comprises:

in response to a synchronization accuracy not meeting a preset requirement, performing, by the first device, operations to position the third terminal device, wherein the operations comprise:

dividing, by the first device, a first synchronization quantization interval into M equal portions to obtain M second synchronization quantization intervals, wherein the first synchronization quantization interval corresponds to the synchronization accuracy;
determining a respective assumed synchronization value for each second synchronization quantization interval of the M second synchronization quantization intervals;
performing positioning calculation based on assumed synchronization values to obtain estimated position coordinates $\widetilde{p}_J$ , (j=1, 2, ..., M);
calculating an estimation error $e_j$ using a following formula:

$$e_j = \frac{1}{N}\sum_{i=1}^{N}(|\widetilde{p}_J - \widetilde{x}_\iota| - d_{j,i}), \quad (\mathrm{j} = 1,2, \dots\dots, \mathrm{M});$$

and
determining position coordinates corresponding to a minimum value of the estimation error $e_j$ as a positioning result, wherein a value of the estimation error $e_j$ is minimized in response to a value of j being

$$\left\{ \mathrm{j} \middle| \min_{j} e_j , (\mathrm{j} = 1,2, \dots\dots, \mathrm{M}); \quad \right\};$$

wherein N represents a number of terminal devices that send pilot signals to the third terminal device or measure pilot signals sent by the third terminal device, $\widetilde{x}_\iota$ represents position coordinates of an i-th terminal device that send pilot signals to the third terminal device or measure pilot signals sent by the third terminal device, $d_{j,i}$ represents a measurement result of a distance between a position of the third terminal device and the i-th terminal device that send pilot signals to the third terminal device or measure pilot signals sent by the third terminal device, and the pilot signals are configured for positioning.

47. The communication device according to any one of claims 43 to 46, wherein the time difference information comprises at least one of:

a synchronization time difference between the first terminal device and the second terminal device;
a time difference between timing of the first terminal device and timing of a first synchronization source; and
a time difference between timing of the second terminal device and timing of a second synchronization source;
wherein the first terminal device is synchronized with the first synchronization source, and the second terminal device is synchronized with the second synchronization source.

48. The communication device according to claim 47, wherein the first synchronization source is the same as the second synchronization source.

**49.** The communication device according to claim 47 or claim 48, wherein the first information further comprises at least one of the timing of the first synchronization source and the timing of the second synchronization source.

**50.** The communication device according to any one of claims 42 to 49, wherein the first information is reported to the first device by one or more of:

the first terminal device;
the second terminal device;
the first synchronization source;
the second synchronization source;
a network device corresponding to the first synchronization source; and
a network device corresponding to the second synchronization source;
wherein the first terminal device is synchronized with the first synchronization source, and the second terminal device is synchronized with the second synchronization source.

**51.** The communication device according to claim 50, wherein:

the first information is actively reported to the first device by at least one of the first synchronization source and the second synchronization source; and/or
the first information is actively reported to the first device by at least one of the first synchronization source and the second synchronization source through at least one of the first terminal device and the second terminal device.

**52.** The communication device according to claim 50, further comprising:
a sending module, configured to send second information before the first device receives the first information, wherein the second information is configured to request target synchronization information, and the target synchronization information comprises at least one of the synchronization information of the first terminal device and the synchronization information of the second terminal device.

**53.** The communication device according to claim 52, wherein the second information comprises at least one of:

the target synchronization information;
a device identifier of a device associated with the target synchronization information; and
expected synchronization accuracy information corresponding to the target synchronization information.

**54.** The communication device according to any one of claims 42 to 53, wherein the first terminal device and the second terminal device function as reference terminal devices participating in sidelink positioning, and the third terminal device functions as a target terminal device participating in sidelink positioning.

**55.** The communication device according to any one of claims 42 to 54, wherein the first device is a positioning server.

**56.** A communication device implemented as a first terminal device, comprising:
a first sending module, configured to send first information to a first device, wherein the first information is configured to indicate at least one of synchronization information of the first terminal device and synchronization information of a second terminal device, and is configured for the first device to position a third terminal device.

**57.** The communication device according to claim 56, further comprising:

a communication module, configured to send pilot signals to the third terminal device and/or receive pilot signals sent by the third terminal device;
wherein the pilot signals are configured for sidelink positioning.

**58.** The communication device according to claim 56 or claim 57, wherein the first information comprises at least one of:

information associated with one or more synchronization sources of at least one of the first terminal device and the second terminal device;
time difference information associated with at least one of the first terminal device and the second terminal device;

and
round-trip delay between the first terminal device and the second terminal device.

59. The communication device according to claim 58, wherein the information associated with the one or more synchronization sources comprises at least one of:

a type of the one or more synchronization sources;
a coverage of the one or more synchronization sources;
a synchronization connection status of the one or more synchronization sources;
cell identity information corresponding to the one or more synchronization sources; and
synchronization accuracy information of the one or more synchronization sources.

60. The communication device according to claim 59, wherein the synchronization accuracy information comprises an accuracy unit of a synchronization estimation, and the accuracy unit comprises one or more of:

an integer multiple of a sampling interval;
nanosecond (ns);
microsecond ($\mu$s); and
millisecond (ms).

61. The communication device according to any one of claims 58 to 60, wherein the time difference information comprises at least one of:

a synchronization time difference between the first terminal device and the second terminal device;
a time difference between timing of the first terminal device and timing of a first synchronization source; and
a time difference between timing of the second terminal device and timing of a second synchronization source;
wherein the first terminal device is synchronized with the first synchronization source, and the second terminal device is synchronized with the second synchronization source.

62. The communication device according to claim 61, wherein the first synchronization source is the same as the second synchronization source.

63. The communication device according to claim 61 or claim 62, wherein the first information further comprises at least one of the timing of the first synchronization source and the timing of the second synchronization source.

64. The communication device according to any one of claims 56 to 63, wherein sending the first information to the first device by the first terminal device, comprises:

receiving, by the first terminal device, the first information sent by at least one of a first synchronization source and a second synchronization source; and
sending, by the first terminal device, the first information to the first device;
wherein the first terminal device is synchronized with the first synchronization source, and the second terminal device is synchronized with the second synchronization source.

65. The communication device according to claim 64, further comprising:
a second sending module, configured to send third information before the first terminal device receives the first information sent by at least one of the first synchronization source and the second synchronization source, wherein the third information is configured to notify at least one of the first synchronization source and the second synchronization source to report the first information.

66. The communication device according to claim 64, further comprising:
a reception module, configured to receive second information sent by the first device before the first terminal device sends the first information to the first device, wherein the second information is configured to request target synchronization information comprising at least one of the synchronization information of the first terminal device and the synchronization information of the second terminal device.

67. The communication device according to claim 66, wherein the second information comprises at least one of:

the target synchronization information;
a device identifier of a device associated with the target synchronization information; and
expected synchronization accuracy information corresponding to the target synchronization information.

68. The communication device according to any one of claims 56 to 67, wherein the first terminal device and the second terminal device function as reference terminal devices participating in sidelink positioning, and the third terminal device functions as a target terminal device participating in sidelink positioning.

69. The communication device according to any one of claims 56 to 68, wherein the first device is a positioning server.

70. A communication device implemented as a second terminal device, comprising:
a sending module, configured to send first information to a first device, wherein the first information is configured to indicate at least one of synchronization information of a first terminal device and synchronization information of the second terminal device, and is configured for the first device to position a third terminal device.

71. The communication device according to claim 70, further comprising:

a communication module, configured to send pilot signals to the third terminal device and/or receive pilot signals sent by the third terminal device;
wherein the pilot signals are configured for sidelink positioning.

72. The communication device according to claim 70 or claim 71, wherein the first information comprises at least one of:

information associated with one or more synchronization sources of at least one of the first terminal device and the second terminal device;
time difference information associated with at least one of the first terminal device and the second terminal device; and
round-trip delay between the first terminal device and the second terminal device.

73. The communication device according to claim 72, wherein the information associated with the one or more synchronization sources comprises at least one of:

a type of the one or more synchronization sources;
a coverage of the one or more synchronization sources;
a synchronization connection status of the one or more synchronization sources;
cell identity information corresponding to the one or more synchronization sources; and
synchronization accuracy information of the one or more synchronization sources.

74. The communication device according to claim 73, wherein the synchronization accuracy information comprises an accuracy unit of a synchronization estimation, and the accuracy unit comprises one or more of:

an integer multiple of a sampling interval;
nanosecond (ns);
microsecond ($\mu$s); and
millisecond (ms).

75. The communication device according to any one of claims 72 to 74, wherein the time difference information comprises at least one of:

a synchronization time difference between the first terminal device and the second terminal device;
a time difference between timing of the first terminal device and timing of a first synchronization source; and
a time difference between timing of the second terminal device and timing of a second synchronization source;
wherein the first terminal device is synchronized with the first synchronization source, and the second terminal device is synchronized with the second synchronization source.

76. The communication device according to claim 75, wherein the first synchronization source is the same as the second synchronization source.

77. The communication device according to claim 75 or claim 76, wherein the first information further comprises at least one of the timing of the first synchronization source and the timing of the second synchronization source.

78. The communication device according to any one of claims 70 to 77, wherein sending the first information to the first device by the second terminal device, comprises:

receiving, by the second terminal device, the first information sent by at least one of a first synchronization source and a second synchronization source; and
sending, by the second terminal device, the first information to the first device;
wherein the first terminal device is synchronized with the first synchronization source, and the second terminal device is synchronized with the second synchronization source.

79. The communication device according to any one of claims 70 to 78, further comprising:
a reception module, configured to receive second information sent by the first device before the second terminal device sends the first information to the first device, wherein the second information is configured to request target synchronization information comprising at least one of the synchronization information of the first terminal device and the synchronization information of the second terminal device.

80. The communication device according to claim 79, wherein the second information comprises at least one of:

the target synchronization information;
a device identifier of a device associated with the target synchronization information; and
expected synchronization accuracy information corresponding to the target synchronization information.

81. The communication device according to any one of claims 70 to 80, wherein the first terminal device and the second terminal device function as reference terminal devices participating in sidelink positioning, and the third terminal device functions as a target terminal device participating in sidelink positioning.

82. The communication device according to any one of claims 70 to 81, wherein the first device is a positioning server.

83. A communication device, comprising:

a transceiver;
a memory; and
a processor;
wherein the memory is configured to store programs, which, when called and executed by the processor, cause the processor to control the transceiver to receive or send signals, in order to implement operations of the method according to any one of claims 1 to 14, or implement operations of the method according to any one of claims 15 to 28, or implement operations of the method according to any one of claims 29 to 41.

84. A device, comprising:
a processor, configured to call and execute programs stored in a memory, to implement operations of the method according to any one of claims 1 to 14, or implement operations of the method according to any one of claims 15 to 28, or implement operations of the method according to any one of claims 29 to 41.

85. A chip, comprising:
a processor, configured to call and execute programs stored in a memory, to cause a device being provided with the chip to implement operations of the method according to any one of claims 1 to 14, or implement operations of the method according to any one of claims 15 to 28, or implement operations of the method according to any one of claims 29 to 41.

86. A non-transitory computer readable storage medium, configured to store programs, which, when called and executed, cause a computer to implement operations of the method according to any one of claims 1 to 14, or implement operations of the method according to any one of claims 15 to 28, or implement operations of the method according to any one of claims 29 to 41.

87. A computer program product, comprising programs, which, when called and executed, cause a computer to implement operations of the method according to any one of claims 1 to 14, or implement operations of the method according to any one of claims 15 to 28, or implement operations of the method according to any one of claims 29 to 41.

88. A computer program, wherein when the computer program is called and executed, causes a computer to implement operations of the method according to any one of claims 1 to 14, or implement operations of the method according to any one of claims 15 to 28, or implement operations of the method according to any one of claims 29 to 41.

**FIG. 1**

Sidelink communication

**FIG. 2**

110

**FIG. 3**

120b                                                120b

Sidelink
communication

**FIG. 4**

Communication
group

Terminal
device 1

Terminal
device 2

Resource
allocation

Resource
allocation

Terminal
device 3

Sidelink
communication

**FIG. 5**

Terminal device 2

Terminal device 6

**Terminal device 1**

Terminal device 3

Terminal device 5

Terminal device 4

**FIG. 6**

Terminal device 1

Terminal device 2

Sidelink data

**FIG. 7**

**FIG. 8**

**FIG. 9**

Synchronization source
UE1

Anchor UE

Target UE

Synchronization source
UE2

**FIG. 10**

The first device receives first information — S1110

The first device positions a third terminal device based on the first information — S1120

**FIG. 11**

Communication device 1200

Reception module 1210

Positioning module 1220

**FIG. 12**

Communication device 1300

First sending module
1310

**FIG. 13**

Communication device 1400

Sending module 1410

**FIG. 14**

Device 1500

Processor
1510

Memory
1520

Transceiver
1530

**FIG. 15**

## INTERNATIONAL SEARCH REPORT

International application No.

**PCT/CN2023/123039**

### A. CLASSIFICATION OF SUBJECT MATTER

H04W56/00(2009.01)i; H04W64/00(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, CJFD, 3GPP: 不同, 同步源, 间, 同步, 侧链路, 旁链路, 直连链路, 直接链路, 时间差, 往返时延, different, synchronization source, inter, synchronization, sidelink, SL, direct link, time difference, RTT

### C. DOCUMENTS CONSIDERED TO BE RELEVANT

| Category* | Citation of document, with indication, where appropriate, of the relevant passages | Relevant to claim No. |
|---|---|---|
| X | CN 115225188 A (HUAWEI TECHNOLOGIES CO., LTD.) 21 October 2022 (2022-10-21) description, paragraphs [0240]-[0273] and [0682]-[0694], and figure 5 | 1-4, 6-45, 47-88 |
| A | CN 113473590 A (HUAWEI TECHNOLOGIES CO., LTD.) 01 October 2021 (2021-10-01) entire document | 1-88 |
| A | WO 2023179637 A1 (HUAWEI TECHNOLOGIES CO., LTD.) 28 September 2023 (2023-09-28) entire document | 1-88 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 June 2024** | **21 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

| International application No. |
| --- |
| **PCT/CN2023/123039** |

| Patent document cited in search report | | | Publication date (day/month/year) | Patent family member(s) | Publication date (day/month/year) |
| --- | --- | --- | --- | --- | --- |
| CN | 115225188 | A | 21 October 2022 | None | |
| CN | 113473590 | A | 01 October 2021 | None | |
| WO | 2023179637 | A1 | 28 September 2023 | None | |

Form PCT/ISA/210 (patent family annex) (July 2022)